(19)

**Europäisches Patentamt**
**European Patent Office**
**Office européen des brevets**

(11) **EP 4 779 456 A1**

(12) **EUROPEAN PATENT APPLICATION**

(43) Date of publication:
**22.07.2026 Bulletin 2026/30**

(21) Application number: **26152051.4**

(22) Date of filing: **15.01.2026**

(51) International Patent Classification (IPC):
***G06F 7/535*** *(2006.01)*

(52) Cooperative Patent Classification (CPC):
**G06F 7/535; H04L 2209/46**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **15.01.2025 EP 25152114**

(71) Applicant: **Roseman Group B.V.
4817 KW Breda (NL)**

(72) Inventors:
- **de Hoogh, Sebastiaan
  Utrecht (NL)**
- **Veeningen, Meilof
  Utrecht (NL)**

(74) Representative: **Veeningen, Meilof Geert
Roseman Labs B.V.
Europalaan 400
3526 KS Utrecht (NL)**

(54) **PRIVACY-PRESERVING INTEGER DIVISION**

(57) The invention relates to a cryptographic system (010) for performing a privacy-preserving computation on secret data. Multiple cryptographic devices perform the computation as a cryptographic secure multi-party computation. The privacy-preserving computation comprises performing an integer division of a numerator and a secret denominator. The secret denominator is normalized into a secret normalized denominator and a secret normalization factor. From the secret normalized denominator, a secret normalized denominator reciprocal is determined. A bias is added to the secret normalized denominator reciprocal to obtain a secret biased normalized denominator reciprocal. The secret division result is determined by performing a deterministic truncation based on the numerator, the secret biased normalized denominator reciprocal, and the secret normalization factor.

Fig. 4

## Description

### FIELD OF THE INVENTION

The invention relates to a cryptographic system for performing a privacy-preserving computation on secret data. The invention further relates to a cryptographic device for use in such a system; to a corresponding computer-implemented method; and to a computer-readable medium.

### BACKGROUND OF THE INVENTION

There is a growing demand for privacy enhancing technologies (PETs), i.e., data processing techniques that intrinsically protect the privacy of the data they operate on. For example, with the cryptographic technique of secure multi-party computation (MPC), multiple parties can perform a computation on their joint input using a distributed cryptographic protocol, such that each party learns nothing beyond the output of computation and his own (private) input.

One reason for the growing demand for PETs is that citizens are becoming increasingly dependent on the digital information stored about them by various companies and institutions. Because of this increasing dependence, the consequences of a breach of personal data are getting increasingly severe. And due to the worldwide surge of cybercrime and nation-state-sponsored cyber espionage, the risk of a data breach has increased sharply in recent years. Also, data-based collaborations between separate entities (like companies, hospitals, local governments) usually implies that personal data is copied between the entities, which poses the risk of uncontrolled spreading of data, in particular personal information. PETs can enable data collaboration between entities without the need for sharing the data in clear-text form. Another factor driving demand for PETs is the emergence of legal frameworks for data protection, such as the European GDPR and the Californian CCPA legislation, and their mandatory compliance. In the context of such frameworks, PETs are valuable as technical safeguards, and typically provide concrete instantiations of abstract legal notions.

In particular, one technique to perform a privacy-preserving computation on secret data is cryptographic secure multi-party computation (MPC). MPC is a cryptographic technique in which a computation is performed in a distributed way between multiple cryptographic devices in such a way that the inputs, intermediate values, and/or outputs of the computation remain hidden from the parties performing the computation. Such values that remain hidden from the parties may be referred to as the secret values of the MPC. In general, a secret value of the MPC may have the property that a limited number of parties, up to a given threshold, does not know the secret value. However, a number of parties that exceeds the threshold may be able to derive the secret value. For example, secret values may be secret-shared, or distributed into shares of the respective parties such that a limited number of the shares, up to the given threshold, does not allow to derive the represented value. In multi-party computation, through the use of secret values and of various protocols that allow to perform operations on secret values, various computations can be performed, while keeping the underlying values hidden from the parties that perform them, thus providing privacy-preserving computation.

A significant body of cryptographic literature is devoted to providing implementations of various operations under multi-party computation in an efficient and secure way. This includes implementing elementary operations such as input, output, addition, and multiplication; and using these elementary operations as building block to implement more complex operations.

In particular, one such more complex operation, that is relevant in many applications, is division. For rational numbers represented as so-called Farey rationals, techniques to perform division are known from L. Harmon et al., "Mercury: Constant-Round Protocols for Multi-Party Computation with Rationals", Cryptology ePrint Archive, paper 2023/855. For fixed-point numbers, techniques are known based on Goldschmidt iteration, or on the Newton-Raphson method.

Specifically, in S. de Hoogh, "Design of large scale applications of secure multiparty computation: secure linear programming", PhD thesis at Eindhoven University of Technology (2012), a cryptographic protocol DivNR is given to divide $[x]/[y]$ two fixed-point numbers under MPC based on Newton-Raphson. This technique involves determining a fixed-point representation reciprocal $[z]$ of the denominator $[y]$; multiplying the numerator $[x]$ by the reciprocal $[z]$; and applying a probabilistic truncation to obtain a representation of the division result with the correct precision. The reciprocal $[z]$ is determined by normalizing the denominator $[y]$ to the interval $[0.5, 1)$; using Newton-Raphson to determine a normalized reciprocal $[a]$ of the normalized denominator $[c]$; and multiplying the normalized reciprocal $[v]$ by the normalization factor $[v]$ of the normalization to obtain the reciprocal $[z]$.

### SUMMARY OF THE INVENTION

It would be desirable to provide cryptographic multi-party computation protocols that allow to efficiently perform an integer division, e.g., a division with an integer result such as a floor division or a ceil division.

In accordance with a first aspect of the invention, a cryptographic system for performing a privacy-preserving computation is provided, as defined by claim 1. In accordance with further aspects of the invention, a cryptographic device for use in such a system; and a cryptographic method of performing such a privacy-preserving computation are provided, as defined by claims 13 and 14, respectively. In accordance with an aspect of the invention, a computer-readable medium is provided, as defined by claim 15.

Various embodiments relate to performing an integer division under multi-party computation. The integer division can be a floor division, for example. Generally, an integer division may have as output an integer; and can take as input either integers or non-integers, such as fixed-point numbers. At least the denominator may be a secret value of the multi-party computation; the numerator can be a public value or a secret value. In particular, the numerator can be equal to one, e.g. the integer division may be an integer reciprocal.

The integer division is preferably a division that does not perform closest rounding, but that instead always rounds up or down, possibly depending on the sign of the input. For example, the integer division can be a floor division, e.g., a division that rounds down for both positive and negative results; a ceil division, e.g., a division that rounds up for both positive and negative results; an inwards rounding division, e.g., a division that rounds towards zero; or an outwards rounding division, e.g., a division that rounds away from zero. The integer division result may be represented as an integer of the multi-party computation, e.g., not using a rational representation that still needs reconstruction as in the reference by L. Harmon et al..

As the inventors realized, although cryptographic protocols are known from the scientific literature that allow to perform division under multi-party computation, such protocols have disadvantages when used to perform an integer division. Techniques based on rationals have limitations on the size of values that can be computed with, and involve a relatively inefficient conversion step from rationals back to integers.

Unfortunately, as the inventors realized, also fixed-point techniques cannot be used directly for integer division, due to problems with inaccuracy and rounding. Namely, the inventors realized that, in when used for integer division, fixed-point-based techniques result in undesired rounding errors. In particular, the DivPR protocol in De Hoogh (2012), in its final step, applies a truncation by a given number of bits B, to arrive at a fixed-point number with a desired output precision. Specifically, for efficiency reasons De Hoogh (2012) uses a probabilistic truncation, e.g., a division by public value $2^B$ that in some cases rounds up and in some cases rounds down.

The inventors envisaged to use such a fixed-point approach for performing an integer division. The integer division may be performed based on a normalized representation of the denominator, comprising a secret normalized denominator and a secret normalization factor. This representation may be obtained by performing a normalization. In case the denominator is represented in the multi-party computation as a floating-point number, the sign, exponent, and/or mantissa of the floating-point representation effectively already provided a normalized representation of the denominator, so in this case, no normalization step may be needed.

From the normalized denominator, a normalized denominator reciprocal may be determined, for example, using Newton-Raphson as in De Hoogh (2012). As in De Hoogh, the division result may be obtained by de-normalizing the normalized denominator reciprocal according to the normalization factor; multiplying by the numerator; and truncating a number of bits of the resulting product. More generally, a deterministic truncation may be performed based on the numerator, the secret biased normalized denominator reciprocal, and the secret normalization factor.

In order to perform an integer division, the inventors envisaged to truncate all k precision bits of this resulting product. Moreover, interestingly, to obtain an integer division that rounds in a predictable way, e.g., down, up, towards zero, or away from zero, the inventors envisaged to perform the truncation as a deterministic truncation, e.g., a division by a public value $2^k$ that rounds in a deterministic way, e.g., that rounds downwards.

Unfortunately, as the inventors realized, even when using deterministic truncation, and even if this deterministic truncation is used to truncate precision bits to arrive at an integer, this still does not lead lead to an integer division with the desired result. Namely, due to rounding errors when computing the normalized denominator reciprocal, the integer division result may be unexpected. For example, when performing a floor division, the computation 100/5 may give 19.99999, leading to 19 instead of 20 as truncated output. On the other hand, when performing a ceil division, the computation 100/5 may give 20.00001, leading to 21 instead of 20 as truncated output.

Unfortunately, the inventors found that such a bias may not be easily accounted for at the stage of performing the rounding, especially since, under multi-party computation, at least the denominator and the computed product of numerator and denominator reciprocal are secret. In some cases, a relatively high deviation from the actual integer output would need to be allowed; and allowing such a high deviation in other cases would introduce rounding errors in other situations; and due to the values being secret, the parties performing the multi-party computation cannot easily compensate for this deviation.

Interestingly however, the inventors realized that incorrect rounding may remedied effectively by instead adding a bias to the reciprocal of the denominator. By increasing the reciprocal of the denominator, an incorrect rounding to a too low value may be prevented, for example, for a floor division. Similarly, by decreasing the reciprocal of the denominator, an incorrect rounding to a too high value may be prevented, for example, for a ceil division.

Specifically, the inventors envisaged to add the bias not to the reciprocal [c] as computed for example by the "Rec" protocol of De Hoogh; but to the normalized denominator reciprocal computed as part of the reciprocal. In particular, the bias may be added before multiplying by the normalization factor and before multiplying by the numerator. Specifically, the normalized denominator reciprocal may be computed as a fixed number. As is known per se, for example, from De Hoogh, a fixed-number may be a number with an integer representation R and a precision P, representing the real number $R*2^{-P}$. The computed normalized denominator reciprocal may have a given maximum absolute error E, for example, an error of at most 8 or at most 4. By adding a bias $B*2^{-P}$ to the normalized denominator of which the integer representation in absolute value is equal to this maximum absolute error, the above-described rounding errors may be avoided.

It is noted that, by adding the bias in the way described, the computation of the reciprocal may essentially be changed from being a completely independent subroutine invoked by the integer division based only on the denominator, to essentially becoming an integral part of the the integer division, for example because the bias may depend on the sign of the numerator and/or denominator.

As the inventors realized, by adding the bias to the normalized denominator, the bias can be kept relatively small. It may be possible to instead add a constant bias to the computed product of numerator and reciprocal, or even directly to the reciprocal [c] as it is computed by De Hoogh, but the inventors noted that, in such cases, a relatively large bias may be needed. Namely, depending on how large the denominator is, the normalization factor may be small or large, and accordingly, also any numeric error in the computation of the normalized denominator, may be blown up by this small or large factor. However, the numerator may be a secret value of which the scale is not known to the parties carrying out the multi-party computation, so, for example, a constant bias to the reciprocal [c] would have to be used to take into account the possibility of large errors. For example, when dividing a large numerator by a similarly large denominator, the reciprocal is small, and multiplying the numerator by the denominator can quickly lead to deviations.

Interestingly, by essentially including the bias in the computation of the reciprocal, by applying it to the normalized denominator reciprocal, it becomes possible to add a bias with a public magnitude, that is as large as needed to actually compensate for numeric errors. As a consequence of this, the inventors found that the integer division in the most common cases equals the expected result. The introduction of a bias can also introduce rounding errors by itself, e.g., adding the bias may cause the deterministic truncation to truncate to a too high value; but the inventors found that this only happens in unlikely cases. For example, by adding a bias to the reciprocal, a division that should result in 0.9999 may be computed as being 1.0001 and may accordingly result in 1 after deterministic truncation; but such cases are much less likely to occur in practice than other cases where the result is correct, such as when the division already has an integer result prior to rounding.

The result of the integer division may be rounded up or down, possibly depending on whether the result is positive or negative. For example, the result may be rounded down, e.g., as a floor division; the result may be rounded up, e.g., as a ceil division; the result may be rounded down for positive numbers and up for negative numbers, e.g., as an inwards rounding division; or the result may be rounded up for positive numbers and down for negative numbers, e.g., as an outwards rounding division. As also discussed elsewhere, the bias may be determined accordingly based on the rounding mode and/or based on the sign of the numerator and/or denominator.

Optionally, the secret normalized denominator reciprocal NDenR may be represented as a fixed-point number, e.g., as a value $V*2^{-P}$ with integer representation V and precision of P bits. The value NDenR may be equal to the actual reciprocal up to a given maximum absolute error E in the integer representation. For example, the error may be at most 4 or at most 8. A bias may be added to the NDenR corresponding to the maximum absolute error E, e.g., a bias B may be added to integer representation V with absolute value corresponding to the error E. The sign may be based on the rounding mode and/or the signs of the numerator and/or denominator, as also discussed elsewhere. The bias may be interpreted as a fixed-point value $B*2^{-P}$; accordingly, effectively, a bias of $\pm B*2^{-P}$ may be added to the reciprocal, where P is the effective precision of the computed reciprocal.

Optionally, the bias may be computed as a secret value of the multi-party computation by determining a sign value for the bias. The sign value for the bias may be determined such that it depends on the sign of the numerator N and/or the sign of the denominator D. For example, for floor division, a positive bias may be used if N>0 and D>0 or if N<0 and D<0. A negative bias may be used if N<0 and D>0 or if N>0 and D<0. Because at least the denominator may be a secret value of the multi-party computation, also the sign value may be secret, and consequently also the bias. The sign value may be computed from the sign of the numerator and/or of the denominator. For example, the sign value may be computed as a secret value of the multi-party computation by performing a multi-party comparison protocol to compute the sign of the numerator and/or the denominator. Other ways of computing the sign value are also possible, however, e.g., based on computing the sign of the product of the numerator and the denominator, of the product of the numerator and the normalization factor; etc. The bias may be determined based on the sign; for example, the sign may be represented as +1 for a positive number and -1 for a negative number, in which case the bias may be determined by multiplying the sign by a constant.

However, the bias does not need to be secret value of the multi-party computation. For example, for inwards rounding division or outwards rounding division, the bias may be chosen as a public constant. As another example, the signs of the numerator and/or the denominator may be publicly known, in which case also the bias may not need to be a secret value.

Optionally, the secret division result may be computed by performing a deterministic truncation based on the product of the numerator, the secret biased normalized denominator reciprocal, and the secret normalization factor. For example, the three values may be multiplied by using a regular multi-party computation multiplication protocol; followed by a deterministic truncation of the result. It is also possible to use one instance of a multiplication protocol, for example to multiply the numerator and the normalized denominator reciprocal; followed by a combined multiplication-and-truncation protocol to multiply the result by the normalization factor, obtaining a truncated result.

Optionally, the secret normalized denominator reciprocal may be determined by applying the Newton-Raphson method. As is known per se, Newton-Raphson can be used to obtain an approximation of the reciprocal of a normalized value in an accurate and efficient way. For example, the Newton-Raphson method may be applied to a scaled value in the interval [0.5, 1), e.g., represented as a fixed-point number. However, other techniques to compute the reciprocal, such as other numeric optimization techniques, such as Goldschmidt division, can in principle be used as well.

Optionally, the normalized denominator may be scaled according to a reciprocal precision prior to determining the normalized reciprocal. In particular, the normalized denominator may be up-scaled to ensure that the precision is at least equal to a desired reciprocal precision and accordingly that at least a desired accuracy of the final result can be achieved. It is also possible to downscale the normalized denominator if the precision is in any case sufficient, in order to efficiently implement the computation of the normalized reciprocal.

Optionally, as part of determining the secret normalized denominator reciprocal, a modulus conversion may be performed based on the denominator. The denominator may be represented in the multi-party computation as a value modulo a given modulus, for example, as a secret-share over the given modulus. In particular, the computation of the reciprocal may be performed as a multi-party computation on values using a larger modulus than the modulus that was used to originally represent the denominator. This way, the denominator reciprocal may be computed with additional accuracy and/or with less truncations being needed in between multiplication steps.

It will be appreciated by those skilled in the art that two or more of the above-mentioned embodiments, implementations, and/or optional aspects of the invention may be combined in any way deemed useful. Modifications and variations of any system and/or any computer readable medium, which correspond to the described modifications and variations of a corresponding computer-implemented method, can be carried out by a person skilled in the art on the basis of the present description, and the other way round as well.

BRIEF DESCRIPTION OF THE DRAWINGS

These and other aspects of the invention will be apparent from and elucidated further with reference to the embodiments described by way of example in the following description and with reference to the accompanying drawings, in which:

Fig. 1 shows a cryptographic device;
Fig. 2 shows a cryptographic system;
Fig. 3 shows a detailed example of performing an integer division;
Fig. 4 shows a detailed example of performing an integer division;
Fig. 5 shows a detailed example of performing an integer division;
Fig. 6 shows a computer-implemented method;
Fig. 7 shows a computer-readable medium comprising data;
Fig. 8 shows a detailed example of performing an integer division.

It should be noted that the figures are purely diagrammatic and not drawn to scale. In the figures, elements which correspond to elements already described may have the same reference numerals.

DETAILED DESCRIPTION OF EMBODIMENTS

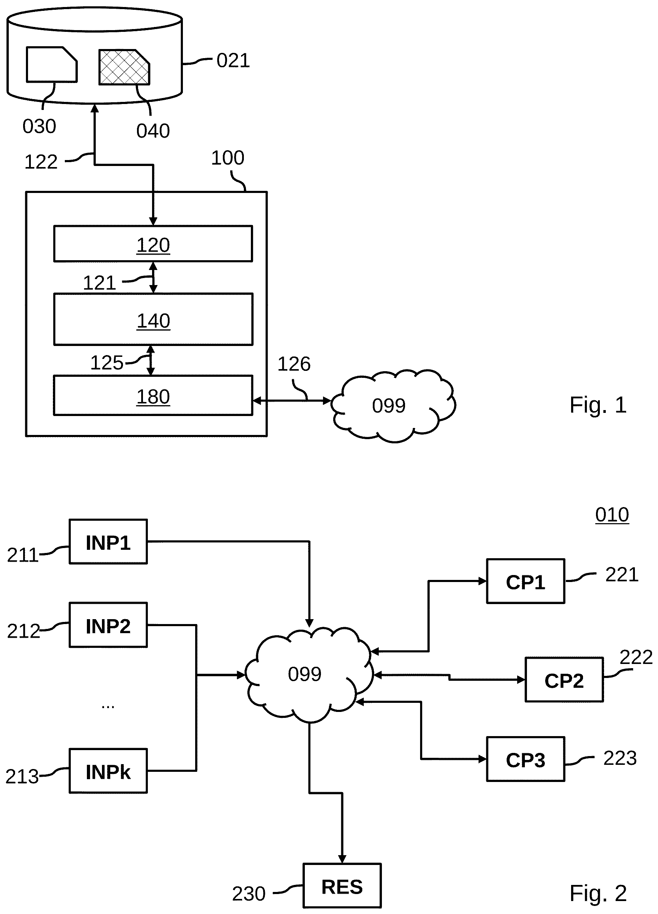

Fig. 1 shows a cryptographic device 100 for use in a cryptographic system as described herein, e.g., in Fig. 2. The cryptographic system may be for performing a privacy-preserving computation on secret data. The computation may be performed as a cryptographic secure multi-party computation between multiple cryptographic devices, including device 100. The privacy-preserving computation may comprise performing an integer division of a numerator and a denominator.

The device 100 may comprise a data interface 120 for accessing data 030 representing the numerator 030; and/or data 040 representing the denominator. Data 030 and/or 040 may be represented as secret values of the multi-party computations, e.g., as secret shares. For example, as also illustrated in Fig. 1, the input interface may be constituted by a data storage interface 120 which may access the data 030, 040 from a data storage 021. For example, the data storage interface 120 may be a memory interface or a persistent storage interface, e.g., a hard disk or an SSD interface, but also a personal, local or wide area network interface such as a Bluetooth, ZigBee or Wi-Fi interface or an ethernet or fibreoptic interface. The data storage 021 may be an internal data storage of the system 100, such as a hard drive or SSD, but also an external data storage, e.g., a network-accessible data storage. In some embodiments, respective data may each be accessed from or distributed across different data storages, e.g., via a different subsystem of the data storage interface 120. Each subsystem may be of a type as is described above for data storage interface 120.

The device 100 may further comprise a processor subsystem 140. Processor subsystem 140 may be configured to, under the multi-party computation, obtain a secret normalized denominator and a secret normalization factor representing a secret denominator 040. Processor subsystem 140 may be further configured to determine, from the secret normalized denominator, a secret normalized denominator reciprocal. Processor subsystem 140 may be further configured to add a bias to the secret normalized denominator reciprocal to obtain a secret biased normalized denominator reciprocal. Processor subsystem 140 may be further configured to determine a secret division result by performing a deterministic truncation based on the numerator, the secret biased normalized denominator reciprocal, and the secret normalization factor.

As also discussed with respect to Fig. 2, the device 100 may be further configured to provide inputs to the multi-party computation, e.g., to input the numerator and/or denominator, e.g. by secret-sharing, encrypting, or otherwise masking them. Instead or in addition, the device 100 may be further configured to obtain outputs from the multi-party computation, e.g., the integer division result or a computation result based thereon.

The system 100 may also comprise a communication interface 180 configured for communication 126 with at least one further cryptographic device of the cryptographic system. Communication interface 180 may internally communicate with processor subsystem 140 via data communication 125. Communication interface 180 may be arranged for direct communication with the other devices, e.g., using USB, IEEE 1394, or similar interfaces. As illustrated in the figure, communication interface 180 may also communicate over a computer network 099, for example, a wireless personal area network, an internet, an intranet, a LAN, a WLAN, etc. For instance, communication interface 180 may comprise a connector, e.g., a wireless connector, an Ethernet connector, a Wi-Fi, 4G or 4G antenna, a ZigBee chip, etc., as appropriate for the computer network. Communication interface 180 may be an internal communication interface, e.g., a bus, an API, a storage interface, etc.

In general, each device described in this specification, including but not limited to the system 100 of Fig. 1 may be embodied as, or in, a single device or apparatus, such as a workstation or a server. The device may be an embedded device. The device or apparatus may comprise one or more microprocessors which execute appropriate software. For example, the processor subsystem of the respective system may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the processor subsystem of the respective system may be implemented in the device or apparatus in the form of programmable logic, e.g., as a Field-Programmable Gate Array (FPGA). In general, each functional unit of the respective system may be implemented in the form of a circuit. The respective system may also be implemented in a distributed manner, e.g., involving different devices or apparatuses, such as distributed local or cloud-based servers.

Fig. 2 shows a cryptographic system 010 for performing a privacy-preserving computation as a cryptographic secure multi-party computation. The cryptographic system 010 may in general comprise multiple input devices, multiple different cryptographic devices, and at least one result device, where the sets of input, cryptographic, and result devices may overlap with each other. As illustrated, the devices typically communicate over a computer network 099, e.g., the internet or a local network.

In particular, shown in the figure are three cryptographic devices CP1, 221; CP2, 222; and CP3, 223. The cryptographic devices may be based on cryptographic device 100 of Fig. 1. Generally, the number of cryptographic devices that is used can vary depending on the particular technique used for the multi-party computation and the security properties which are desired. For example, the number of cryptographic devices CPi can be two, three, or more. Although the cryptographic devices of the cryptographic system are typically distinct devices, e.g., operated by different organizational entities, it is also possible to combine the different cryptographic devices into a single device, for example, for performing the multi-party computation as a so-called MPC-in-the-Head, see, e.g., Y. Ishai et al., "Zero-knowledge from secure multiparty computation", proceedings STOC 2007.

The cryptographic devices CPi may be configured to perform a secure multi-party computation (also known per se as multi-party computation, secure computation, or MPC). Generally, a multi-party computation may be a distributed protocol between the cryptographic devices for performing a computation in a privacy-preserving way. Depending on the specific technique used, MPC may ensure privacy and/or correctness of the computation against an attacker that eavesdrops or controls one or more (but typically not all) of the cryptographic devices. As known per se, any computation can be performed as a multi-party computation (in other words, "under the multi-party computation"), but concrete computational and communication efficiency can in general greatly depend on how exactly the computation is performed.

In particular, the multi-party computation can be performed based on one of the following techniques:

- based on secret sharing, in particular arithmetic secret sharing such as Shamir secret sharing, replicated secret sharing, or additive secret sharing. For example, the multi-party computation can be based on the techniques described in Shamir, "How to Share a Secret", Communications ACM, 1979; Ben-Or, Goldwasser, Wigderson, "Completeness Theorems for Non-Cryptographic Fault-Tolerant Distributed Computation (Extended Abstract)", Proceedings of the 20th Annual ACM Symposium on Theory of Computing, 1988; Chaum, Crepeau, Damgaard, "Multiparty Unconditionally Secure Protocols (Extended Abstract)", Proceedings of the 20th Annual ACM Symposium on Theory of Computing, 1988; Ito, Saito, Nishizeki, "Secret sharing scheme realizing general access structure", Electronics and Communications in Japan (Part III: Fundamental Electronic Science), 1989; Damgaard, Pastro, Smart, Zakarias, "Multiparty Computation from Somewhat Homomorphic Encryption", proceedings CRYPTO 2012;

- based on garbled circuits, e.g., see Yao, "Protocols for Secure Computations (Extended Abstract)", 23rd Annual Symposium on Foundations of Computer Science, Chicago, 1982;
- based on oblivious transfer, e.g., see Goldreich, Micali, Wigderson, "How to Play any Mental Game or A Completeness Theorem for Protocols with Honest Majority", Proceedings of the 19th Annual ACM Symposium on Theory of Computing, 1987;
- based on threshold homomorphic encryption, e.g., see Cramer, Damgaard, Nielsen, "Multiparty Computation from Threshold Homomorphic Encryption", proceedings EUROCRYPT 2001;
- based on any combination of the above, e.g., see Demmler, Schneider, Zohner, "ABY - A Framework for Efficient Mixed-Protocol Secure Two-Party Computation", proceedings NDSS 2015.

For example, the multi-party computation can be performed based on secret sharing, in particular arithmetic secret sharing such as Shamir secret sharing, replicated secret sharing, or additive secret sharing. In arithmetic secret sharing, the shared values may be numbers defined modulo a certain modulus, e.g., a prime modulus. The modulus may have bit length at least 31 bits, at least 63 bits, at least 127 bits, or at least 255 bits.

In particular, the arithmetic secret sharing may be a multiplicative linear secret sharing, such as Shamir secret-sharing or replicated secret sharing. As is known per se, multiplicative linear secret sharing generally admits efficiently performing additions and multiplications under multi-party computation, as well as efficient conversion to additive secret sharing, e.g., see, R. Cramer et al., "General Secure Multi-Party Computation from any Linear Secret-Sharing Scheme", proceedings EUROCRYPT 2000.

For example, the multi-party computation can be based on the techniques described in Shamir, "How to Share a Secret", Communications ACM, 1979; Ben-Or, Goldwasser, Wigderson, "Completeness Theorems for Non-Cryptographic Fault-Tolerant Distributed Computation (Extended Abstract)", Proceedings of the 20th Annual ACM Symposium on Theory of Computing, 1988; Chaum, Crepeau, Damgaard, "Multiparty Unconditionally Secure Protocols (Extended Abstract)", Proceedings of the 20th Annual ACM Symposium on Theory of Computing, 1988; Ito, Saito, Nishizeki, "Secret sharing scheme realizing general access structure", Electronics and Communications in Japan (Part III: Fundamental Electronic Science), 1989; Damgaard, Pastro, Smart, Zakarias, "Multiparty Computation from Somewhat Homomorphic Encryption", proceedings CRYPTO 2012.

Various higher-level operations such as sorting and integer comparison can be performed based on such basic multi-party computation protocols as discussed e.g. in M. Keller, "MP-SPDZ: A Versatile Framework for Multi-Party Computation", proceedings ACM CCS 2020; or as implemented in MPyC, see https://github.com/lschoe/mpyc.

The multi-party computation may be configured to perform operations on so called sharings, or secret shares, of values. A secret share may be a distributed representation of an input, intermediate, or output value of the MPC. A limited number of shares, up to a certain threshold t, may not allow to derive the represented value. The threshold may be configurable, with different techniques supporting different possible threshold. In particular, the multi-party computation may be an honest majority MPC, where the threshold t is strictly smaller than half the number of parties n, e.g., 1/2(n-1). Examples of sharings are multiplicative secret sharing schemes, such as Shamir secret sharing or replicated secret sharing.

A value that is computed on by the MPC but that is represented among the parties in such a way that no single party, more generally no unqualified set of parties, can derive the value from that representation, is referred to as a secret value, or private value, of the MPC. A secret value can be a secret sharing, but it is also possible in general e.g. to use a threshold encryption, e.g., Paillier encryption. For example, a secret value can be a secret input, a secret output, or a secret intermediate value. Here, a secret input may be known in the plain by the party inputting it, and known only in a secret representation by the cryptographic devices CPi; and similarly, a secret output may be learned in the plain by the party receiving it as output, but may be known only in a secret representation by the cryptographic devices **CPi.** A private intermediate value may be known only to the cryptographic devices **CPi,** and only as a secret representation. By processing values using secret representations, the data can be kept secret, at least as long as the underlying assumptions of the multi-party computations (e.g., a number and/or type of corruptions of the cryptographic devices) are satisfied.

Also shown in the figure are a number of input devices **INP1,** 211; **INP2,** 212; up to **INPk,** 213. The input devices may input respective input data for the computation. The input devices 211-213 may use the hardware configuration discussed in Fig. 1. The number of input devices can be two, at most or at least three, or at most or at least five, for example. In many cases, the sets of inputs devices **INPi** and cryptographic devices **CPi** may wholly or partially overlap. For example, the set of input devices may be a subset or a superset of the set of cryptographic devices, or may be exactly the same.

Further shown is a result device **RES,** 230. The result device **RES** may obtain a result of the MPC based on the performed privacy-preserving computation. It is also possible for multiple respective result devices to obtain multiple respective results of the multi-party computation. Although illustrated as a separate device in the figure, the result device(s) **RES** can be the same devices as an input device **INPi** and/or cryptographic device **CPi.** Generally, the result device may be implemented using the hardware configuration discussed w.r.t. Fig. 1.

Many known multi-party computation techniques are defined per se for the case where the input and result devices **INPi** and **RES** form a subset of the set of cryptographic devices **CPi** that perform the MPC. To use such techniques in a setting where an input and/or result device does not perform the MPC itself, an input device can for example determine a secret representation, e.g., a secret sharing, and distribute it among the computation devices. Similarly, a result device can for example receive a secret representation, e.g., respective secret shares, of an output from the computation devices and derive the output from the secret representation. It is also possible to use specific techniques for letting an external party provide inputs to and/or obtain outputs from a multi-party computation. For example, the techniques from the following reference can be used: T. P. Jakobsen, J. B. Nielsen, and C. Orlandi. "A framework for outsourcing of secure computation", proceedings CCSW'14. It is noted that, apart from such inputs by external parties **INPi,** the cryptographic devices **CMPi** that perform the MPC themselves typically also provide inputs to the multi-party computation as part of performing various operations, e.g., by inputting representations of the first and second remainder as described herein.

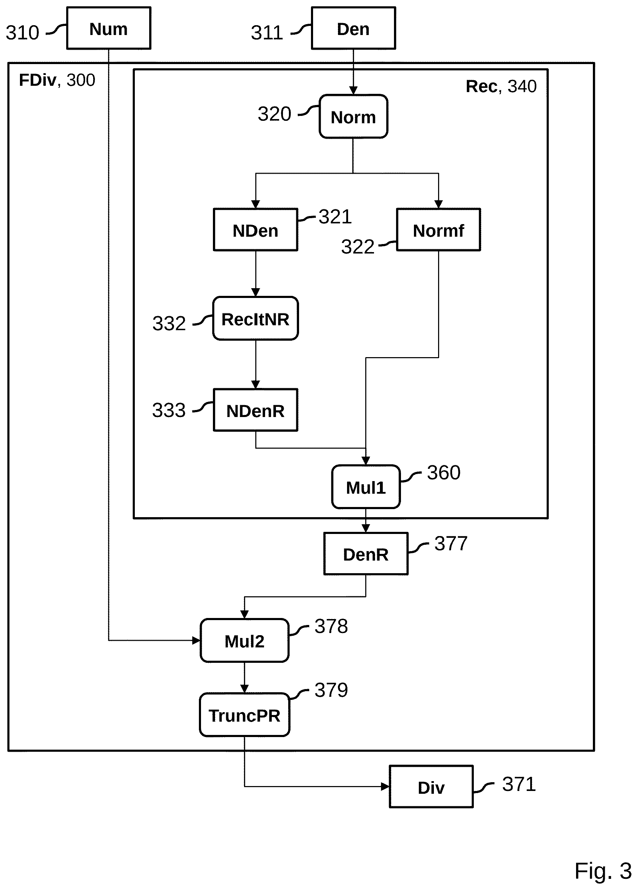

Fig. 3 shows an example of performing a division of fixed-point numbers under multi-party computation. This example is used to discuss several techniques that are, elsewhere in this specification, used to perform an integer division. This example is based on the protocol DivNR as discussed in S. de Hoogh, "Design of large scale applications of secure multiparty computation: secure linear programming", PhD thesis at Eindhoven University of Technology, 2012 (incorporated herein by reference inasfas as the description of the DivNR protocol is concerned).

In particular, the figure shows a multi-party computation protocol for fixed-point division **FDiv,** 300. The protocol **FDiv** may take as input a numerator **Num,** 310; and a denominator **Den,** 311; both secret fixed-point values V*2^-f, e.g., with a range $k$-$f$ and a precision $f$, e.g., V may lie in the interval (-2^(k-f-1), 2^(k-f-1)]. The protocol may output a fixed-point value **Div,** 371 representing the division of numerator **Num** by denominator **Den,** e.g., with the same precision f.

The division **FDiv** may be performed by first using a multi-party computation reciprocal protocol **Rec,** 340, to determine a reciprocal **DenR,** 377 of the denominator **Den.** The reciprocal subroutine may comprise a normalization operation **Norm,** 320, to normalize the denominator **Den** into a normalized denominator **NDen,** e.g., in the interval [0.5, 1) and with precision $k$; and into a normalization factor **Normf,** 332 such that, as integers, the normalized denominator is equal to the normalization factor times the denominator.

Further, as part of the computation **Rec** of the reciprocal, a reciprocal **NDenR,** 333, of the normalized denominator **NDen** may be determined in an operation **RecItNR,** 332, under the multi-party computation. For example, as described in "Design of large scale applications of secure multiparty computation: secure linear programming", the reciprocal may be determined by applying the Newton-Raphson method.

Finally, as part of the computation **Rec** of the reciprocal, the normalized denominator reciprocal **NDenR** may be multiplied **Mul1,** 360, by the normalization factor **Normf** to obtain the reciprocal **DenR.**

Having computed the reciprocal **DenR,** the division result may obtained by multiplying **Mul2,** 378, the numerator **Num** by the reciprocal **DenR.** Finally, a probabilistic truncation **TruncPR,** 379, may by used to obtain a fixed-point representation **Div,** 371, of the division result in a desired output precision. For example, with the parameters above, a truncation of $2k$-$f$ bits may be performed to obtain representation **Div** with a precision of $f$ bits. Accordingly, the division result may be determined by performing a probabilistic truncation based on the numerator **Num,** the normalized denominator reciprocal **NDenR,** and the normalization factor **Normf;** specifically, by performing a probabilistic truncated multiplication of the numerator **Num,** the normalized denominator reciprocal **NDenR,** and the secret normalization factor **Normf.**

In this example, the output precision is f. It is noted that, by truncating an additional f bits in truncation **TruncPR,** an integer output **Div** may be obtained. However, due to the probabilistic nature of the truncation, and due to the possibility of numeric errors in the computation **RecItNR** of the normalized reciprocal, this output is not suitable as an integer division output, e.g., a floor, ceil, inward, or outward rounding output.

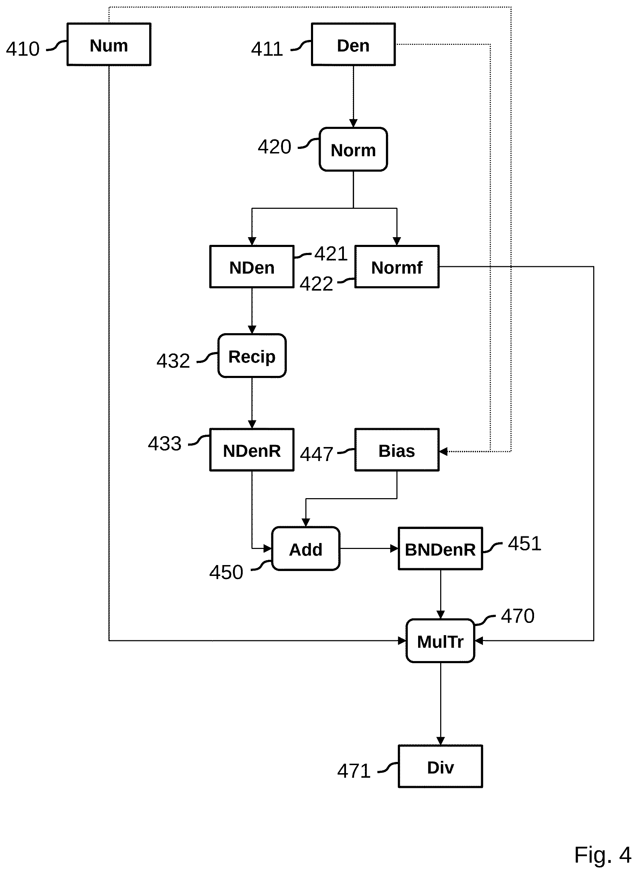

Fig. 4 shows a detailed, yet non-limiting, example of performing an integer division under multi-party computation. This example is based on the example of Fig. 3, and the options described with respect to that figure also apply here.

As in Fig. 3, also this figure shows a numerator **Num** 410 and a denominator **Den** 411, to which a division is to be applied. In this figure, the division may be an integer division, such as a floor, ceil, inwards rounding, or outwards rounding division; and accordingly, the division result **Div,** 471, may be an integer. The numerator **Num** can be an integer or a fixed-point number, for instance; and also the denominator **Den** can be an integer or a fixed-point number. The numerator **Num** can be a secret or public value of the multi-party computation; but at least the denominator **Den** is typically a secret value.

As shown in the figure, and similarly to Fig. 3, the denominator **Den** may be normalized **Norm,** 420, into a normalized denominator **NDen,** 421 and a normalization factor **Normf,** 422. From the normalized denominator **NDen,** in a reciprocal operation **Recip,** 432, a normalized denominator reciprocal **NDenR,** 433, may be determined, for example, using Newton-Raphson. The output **NDenR** may be a fixed-point number with a given reciprocal precision R. The determination **Recip** of the reciprocal may be performed in such a way that the output **NDenR** has at most an absolute error E*2^-R, corresponding to an error E in its integer representation. A given absolute error E, for example of at most 1, at most 2, at most 4, or at most 8, can for example be achieved by performing a sufficient number of Newton-Raphson iterations as is known per se.

Interestingly, in this example, a bias **Bias,** 447 may be added **Add,** 450, to the normalized denominator reciprocal **NDenR** to obtain a biased normalized denominator reciprocal **BNDenR,** 451. The bias may in absolute value be equal to the maximum absolute error E of determining Recip the reciprocal. The sign may can depend on the integer division mode and optionally on the sign of the numerator **Num** and/or the sign of the denominator **Den,** e.g.:

- for floor division, the sign of the bias may be positive if the numerator and denominator are both strictly positive or both strictly negative; and negative if the numerator is strictly positive and the denominator is strictly negative, or the other way around;
- for ceil division, the sign of the bias may be negative if the numerator and denominator are both strictly positive or both strictly negative; and positive if the numerator is strictly positive and the denominator is strictly negative, or the other way around;
- for inwards rounding division, the sign of the bias may be positive;
- for outwards rounding division, the sign of the bias may be negative.

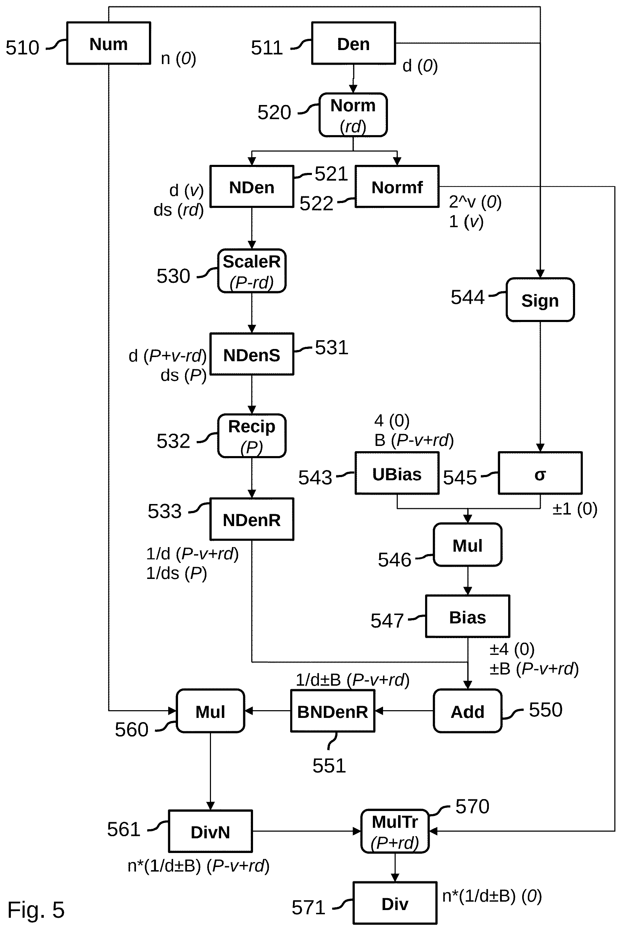

In cases where the sign of the bias depends on the sign of the numerator where the numerator is a secret value of the multi-party computation, and/or where the sign of the bias depends on the denominator, the sign of the numerator may be determined using a secure multi-party computation comparison protocol, e.g., by comparing the numerator and/or denominator to zero as known per se in the art and as also discussed with respect to Fig. 5.

Based on the biased normalized denominator reciprocal **BNDenR,** and further based on the numerator **Num** and the normalization factor **Normf,** the division result **Div** may be determined. Interestingly, the division result **Div** may be determined by performing a deterministic truncated multiplication **MulTr,** 470; in other words, by multiplying the values and truncating a fixed number of bits from the result in a deterministic way. For example, the three values may be multiplied by performing two multiplications; and the result may be deterministically truncated; or any two of three values may be multiplied with the result being multiplied-and-truncated with the third result in an integrated multiplication-and-truncation protocol; and so on. The inventors found that it is also possible for example to multiply the numerator **Num** by the biased normalized denominator reciprocal **BNDenR;** probabilistically truncate off any precision bits of the numerator; multiply the result by the normalization factor **Normf;** and then deterministically truncate additional bits to arrive at an integer division result **Div.**

In any case, by using a deterministic truncation, the desired integer division result may be obtained. For example, a cryptographic protocols for deterministic truncation as known for example from S. de Hoogh, "Design of large scale applications of secure multiparty computation: secure linear programming", can be used. Such a protocol may effectively perform a floor division $\lfloor z/2^f \rfloor$ of a value z by a public value $2^f$. Interestingly, it may be noted that this protocol can also be used to perform a ceil division $\lceil z/2^f \rceil$ of a value z by a public value $2^f$ by expressing the ceil division in terms of the floor division, e.g. using the relation $\lceil z/2^f \rceil = \lfloor (z + 2^f - 1)/2^f \rfloor$ or using the relation $\lceil z/2^f \rceil = \lfloor (z-1)/2^f \rfloor + 1$.

For example, to compute floor division result **Div,** deterministic truncation may be used to perform a floor division of the product *P* of the numerator Num, the biased normalized denominator reciprocal **BNDenR;** and the normalization factor **Normf** to remove non-integer bits. Similarly, to compute a ceil division result **Div,** the deterministic truncation may be used to perform a ceil division of the product *P*. To compute an inwards or outwards rounding division, a floor division or ceil division may be performed conditionally on the sign of the output **Div.** As also detailed elsewhere, such a conditional floor or ceil division can for example be performed under multi-party computation by obliviously selecting a floor division or ceil division output; or by obliviously selecting an input to the deterministic truncation.

Fig. 5 shows a detailed, yet non-limiting, example of performing an integer division under multi-party computation. This example is based on the example of Fig. 4, and the different options and alternatives discuss with respect to that figure, also apply here.

The figure shows a numerator **Num,** 510, and a denominator **Den,** 511, to which an integer division are to be applied. As an illustrative example, the figure shows the numerator and denominator as being integers, e.g., the numerator may be a value n with precision 0 and the denominator may be a value d with precision 0. This is illustrated in the figure by the labels n (*0*) and d (*0*). The denominator **Den** may be a secret value of the multi-party computation. The numerator **Num** can be a secret value of the multi-party computation, but can also be a public value, or even a fixed constant. In particular, the numerator may be equal to one, in which case the integer division may correspond to the computation of an integer reciprocal of the denominator **Den.** It is noted that the presented techniques also apply in the situation where the numerator and/or denominator have non-zero precision.

The figure further shows a normalization operation **Norm,** 520, in which a multi-party computation protocol may be used to normalize the denominator **Den** into normalized denominator **NDen** and a normalization factor **Normf.** MPC protocols to achieve such normalization are known per se. The normalization may have as parameter the target bit-length of the normalized denominator. In particular, if in the case where the denominator has precision 0, this bit-length may be set equal to the range *rd* of the denominator.

The normalization protocol **Norm** may normalize the denominator **Den** to the interval [0.5, 1). Accordingly, the normalized denominator **NDen** may be interpreted as a fixed-point representation of the normalized denominator with a precision equal to the target bit-length, e.g., ds (*rd*). At the same time, the normalized denominator **NDen** may be interpreted as a fixed-point representation of the denominator d with a given precision v, e.g., d (v), where this precision v however may not be known to the parties that carry out the multi-party computation. Similarly, the normalization factor **Normf** may be interpreted as an integer equal to 2^v, e.g., 2^v (0); or, at the same time, as a fixed-point representation of one with precision v, e.g., 1 (*v*).

As illustrated in the figure, optionally, a scaling operation **ScaleR,** 530, may be performed to scale the normalized denominator **NDen** according to a certain reciprocal precision P. The reciprocal precision *P* can for example be configured such that it is at least equal to a certain minimum number of bits, e.g., at least 10 bits, at least 20 bits, or at least 40 bits; and/or at least equal to the range of the numerator; and/or at least equal to the range of the denominator. For example, if the reciprocal precision *P* is larger than the precision of the normalized denominator **NDen,** then the scaling operation **ScaleR** may upscale the normalized denominator **NDen** to the reciprocal precision, e.g., by *P-rd* bits, for example, by multiplying by 2^(P-rd). If the reciprocal precision *P* is smaller than the precision of the normalized denominator **NDen,** then the scaling operation **ScaleR** may downscale the normalized denominator **NDen** to the reciprocal precision, for example, by applying a probabilistic or deterministic truncation, e.g., by *(rd-P)* bits. The resulting scaled normalized denominator **NDenS,** 531, may be interpreted as a representation of the scaled denominator, e.g., ds (*P*), or of the denominator, e.g., d (*P+v-rd*).

While not shown in the figure, optionally, the scaled normalized denominator **NDenS** may be obtained by by perform a modulus conversion based on the denominator **Den.** For example, the denominator **Den** may be represented in the multi-party computation as a value modulo a modulus that is insufficiently large to represent the scaled normalized denominator with the reciprocal precision, and/or to perform the computation of the reciprocal. In such cases, as is known per se, a modulus conversion may be performed to represent the denominator modulo a larger modulus. For example, the modulus conversion may be performed before the normalization **Norm;** between the normalization **Norm** and the scaling **ScaleR;** or after the scaling **ScaleR.** It may be noted that the modulus conversion may not effect the values that are represented. Optionally, a modulus conversion back to the original modulus may be performed, e.g., on division result **Div.**

Further shown is a reciprocal operation **Recip,** 532. In reciprocal operation **Recip,** a normalized denominator reciprocal **NDenR,** 533, may be determined from the, optionally scaled, normalized denominator **NDenS.** The normalized denominator reciprocal **NDenR** may be determined, under the multi-party computation, for example by applying the Newton-Raphson method. This is known from S. de Hoogh, "Design of large scale applications of secure multiparty computation: secure linear programming". The reciprocal operation **Recip** may have as a parameter the used precision P, meaning that the operation may compute the reciprocal of value ds (P), for example in input domain [0.5, 1), resulting in a reciprocal 1/ds (*P*), for example in output domain [1, 2). Since the scaled denominator may be smaller than the denominator by a factor rd-v, the normalized denominator reciprocal may correspond to a reciprocal of the denominator 1/d (*P-v+rd*).

In this example, the output precision is equal to the input precision, but this is not necessary. Also, in principle, any technique for determining the reciprocal may be used. It is preferred however if the method has a known maximum error, e.g., an absolute error E in the integer representation of at most 1, at most 2, at most 4, or at most 8, e.g., corresponding to an error E in the computed reciprocal 1/ds of E*2^-P. For example, for Newton-Raphson, such a known maximum error can be achieved by performing a sufficient number of iterations depending on the output precision as is known per se.

The figure further shows an addition operation **Add,** 547 in which a bias **Bias,** 547, may be added to the normalized denominator reciprocal **NDenR** to obtain a biased normalized denominator reciprocal **BNDenR,** 551. The magnitude of the sign may equal to an unsigned bias **UBias,** 543. The unsigned bias may be configured such that it is larger than or equal to the maximum error in the computed reciprocal. The example shows an unsigned bias with an integer representation equal to 4 (with precision 0), corresponding to a value B=4*2^-(P-v+rd) with precision *P-v+rd*. The bias **Bias** may be equal to ±B (*P-v+rd*), corresponding to an integer representation of ±4 (0). Adding **Add** the bias may result in a normalized denominator reciprocal **BNDenR** equal to 1/d±B (*P-v+rd*).

The bias **Bias,** 547, may be determined form the unsigned bias **UBias** by optionally applying a sign σ, 545 to the unsigned bias **UBias.** For example the sign σ may be represented as ±1, in which case the sign may be applied by multiplying **Mul,** 546, the unsigned bias **UBias** with the sign, for example using a secure multi-party computation multiplication protocol as is known per se.

The way that the bias **Bias** is determined, generally depends on whether or not the numerator **Num** and/or denominator **Den** can be be positive or negative; and on the type of integer division (e.g., floor, ceil, inwards rounding or outwards rounding) to be performed. It is noted that, to determine the bias **Bias,** the case that the numerator **Num** and/or denominator **Den** is zero in many cases do not need to be dealt with in particular because a zero numerator may in any case result in a zero result, regardless of the bias; and a zero denominator may in any case be disallowed or lead to undefined results.

Generally, for floor division, the bias **Bias** may be computed as a positive bias if the numerator **Num** and the denominator **Den** have the same sign, and as a negative bias if the numerator and denominator have opposite signs. For example, the sign σ may be computed by computing the sign σ(N) of the numerator and the sign σ(D) of the denominator as being -1 (negative) or +1 (positive); and multiplying σ(N)*σ(D) the signs. Depending on whether the numerator and/or denominator are known to be positive or negative or not, and depending on whether or not the numerator is secret, one or both of the values may be computed by using a secure multi-party computation comparison protocol **Sign,** 544, as is known per se. It is also possible to compute the product of the numerator **Num** and denominator **Den,** or of the numerator **Num** and the normalization factor **Normf,** for example, and compute the sign of such a product. Various alternatives may be envisaged. For ceil division, similarly, the bias **Bias** may be computed as a negative bias if the numerator **Num** and the denominator **Den** have the same sign, and as a positive bias otherwise.

Interestingly, for inwards rounding division and outwards rounding division, it is possible to always use a positive or negative bias, respectively, without the need to perform a multi-party computation comparison protocol **Sign.**

Based on the biased normalized denominator reciprocal **BNDenR;** the normalization factor **NormF;** and the numerator **Num;** a division result **Div,** 571, of the integer division may be determined. Generally, the division result may be computed by performing a deterministic truncation based on these values 510, 551, 522.

In particular, the division result may be computed as a deterministic truncation, by an appropriate number of bits, based on the product of the values 510, 551, 522. For example, in the case illustrated in the figure, multiplying the numerator **Num** equal to n (*0*); the biased normalized denominator reciprocal **BNDenR** equal to 1/d±B (*P-v+rd*); and the normalization factor 1 (*v*), may result in a value n*(1/d±B)*1 (*P+rd*). Accordingly, a deterministic truncation of *P+rd* bits may be performed. Interestingly, it may be noted that, due to the normalization factor, this product has a known precision even if the precision of the biased normalized denominator reciprocal **BNDenR** and the normalization factor contain the secret value *v*.

Generally, to perform the deterministic truncation based on the product, it is possible to first compute the product and then perform a deterministic truncation; but it is also possible to incorporate the deterministic truncation into one one of the product using a combined multi-party computation protocol for multiply-and-truncate, examples of which are known in the art. For example, the figure illustrates multiplying **Mul,** 560, the numerator and the biased normalized denominator reciprocal **BNDenR** to obtain a normalized division result **DivN;** and then applying a deterministic multiply-and-truncate **MulTr,** in this example by *P+rd* bits, to obtain division result **Div,** n*(1/d±B) (*0*).

The deterministic truncation may be performed based on the product in various ways, depending on the type of integer division. Generally, it may be noted that deterministic truncation of a value z by *f* bits may correspond mathematically to a floor division $\lfloor z/2^f \rfloor$ by the public divisor $2^f$. For example, to perform a floor division of the numerator **Num** by the denominator **Den,** a deterministic truncation of the product may be applied. As another example, to perform a ceil division, deterministic truncation $\lceil \cdot /2^f \rceil$ may be applied based on the product P according to the relation: $\lceil P/2^f \rceil = \lfloor (P-1)/2^f \rfloor + 1$ or according to the relation $\lceil P/2^f \rceil = \lfloor (P+2^f-1)/2^f \rfloor$.

As another example, to perform an inwards rounding division or an outwards rounding division, the deterministic truncation may be applied such that the result of the deterministic truncation is equal to that for the floor division or the ceil division depending on whether the output **Div** is positive. To this end, a sign value S for the output **Div** may be determined, for example, by using a multi-party comparison protocol to compare the product P to zero; or by using respective multi-party computation protocols to compare numerator **Num** and/or denominator **Den** to zero. For example, deterministic truncation may be applied to an input conditionally selected based on the sign value. Or, deterministic floor and ceiling truncations may be performed and the appropriate truncation output may be selected based on the sign value.

For example, to perform an inwards or outwards rounding division, deterministic truncation $\lfloor \cdot / 2^f \rfloor$ may be applied to an input conditionally selected based on a sign value indicating whether the output is positive or negative. For example, if S is computed such that S=1 indicates that the output is positive, and S=0 indicates that the output is negative, then output **Div** of the inwards rounding division may be computed as

$$\lfloor (S*P+(1-S)*(P+2^f-1))/2^f \rfloor.$$ Similarly, output **Div** of an outwards rounding division may in such a case be computed as

$$\lfloor ((1-S)*P+S*(P+2^f-1))/2^f \rfloor.$$

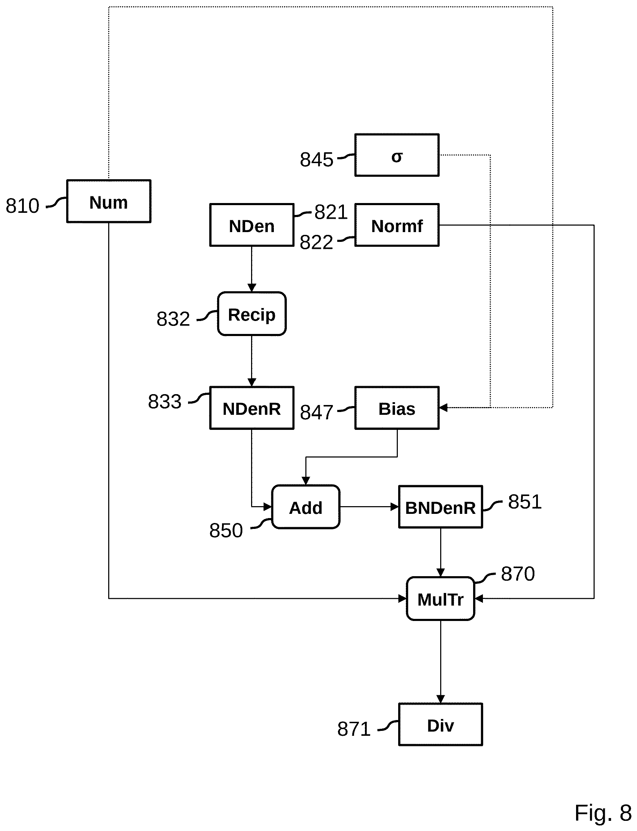

**Fig. 8** shows a detailed, yet non-limiting, example of performing an integer division under multi-party computation. This example can be based on the example of Fig. 4 or of Fig. 5, and the options described with respect to these figures also apply here.

Also in this example, an integer division may be performed of a numerator and a secret denominator. In this particular example, the secret denominator may be represented in the multi-party computation as a floating-point number. In this case, the division may be performed based on obtaining a secret normalized denominator and a secret normalization factor, without performing a normalization as part of the division.

Namely, as is known per se, a floating-point number may be represented by at least an exponent and a mantissa, and optionally also a sign to allow for negative numbers. For example, a floating-point value represented by a sign S, a mantissa M, and an exponent E, may represent the value (-1)^S * (1.M) * 2^(E-127). Here, the mantissa may represent the fractional part of the value, normalized e.g. to the interval [1, 2). Accordingly, given a floating-point representation of the denominator, its mantissa may act as a normalized denominator **NDen,** 821; its exponent may act as a normalization factor **Normf,** 822; and optionally, its sign may act as a sign $\sigma$, 845 as also discussed with respect to Fig. 5. Optionally, by increasing the exponent by one. the mantissa may be interpreted as representing a value in the interval [0.5, 1) as used elsewhere in this specification.

The numerator **Num** can in general be a secret or a public value of the multi-party computation. The numerator **Num** 810 can for example be an integer or a fixed-point number as also described with respect to Figs. 4 and 5. It is also possible to use a numerator that is represented under multi-party computation as a floating-point number. For example, the numerator may be represented by a numerator mantissa, a numerator exponent, and/or a numerator sign. In this case, for example, the numerator mantissa can be used as the numerator **Num;** and the numerator exponent and/or the numerator sign can be incorporated into the normalization factor

**Normf** and sign $\sigma$ of the denominator respectively, for example by subtracting the sign of the numerator from the sign of the denominator. For example, a division of numerator (-1)^SN * (1.MN) * 2^(EN-127) by a denominator (-1)^SD * (1.MD) * 2^(ED-127) may be implemented as a division of a normalized numerator (1.MN), **Num** by the denominator (-1)^(SD-SN) * (1.MD) * 2^(ED-EN). It is also possible for example to first convert a floating-point numerator to a fixed-point numerator before proceeding with the remainder of the computation.

As in Fig. 4 or Fig. 5, a reciprocal operation **Recip,** 832, may be performed to determine a normalized denominator reciprocal **NDenR,** 833.

Moreover, as in Fig. 4 or Fig. 5, a bias **Bias,** 847, may be determined. The bias may be determined based on the numerator, for example, by determining the sign of the fixed-point or integer representation **Num** of the numerator. This may not be needed if the sign of the numerator is known, e.g., because the numerator has been normalized also also described above. The bias **Bias** may be determined further based on the sign $\sigma$ of the denominator, as also described w.r.t. Figs. 4 and 5.

As in Fig. 4 or Fig. 5, the bias **Bias** may be added **Add,** 850, to the normalized denominator reciprocal **BNDenR,** 851.

As in Fig. 4 or Fig. 5, division result **Div,** 871, may be determined based on the biased normalized denominator reciprocal **BNDenR,** and further based on the numerator **Num** and the normalization factor **Normf.** To this end, the normalization factor E, **Normf** may be exponentiated, e.g. to determine the normalization factor as a fixed-point number, e.g., 2^(E-127), using techniques known in the art per se. For example, the exponentiation may be performed by converting the normalization factor to a unit vector and by computing an inner product between the unit vector and powers of two, using protocols known in the art per se. As in other figures, interestingly, the division result **Div** may be determined by performing a deterministic truncated multiplication **MulTr,** 870. Thereby, in particular, an integer division result may be obtained.

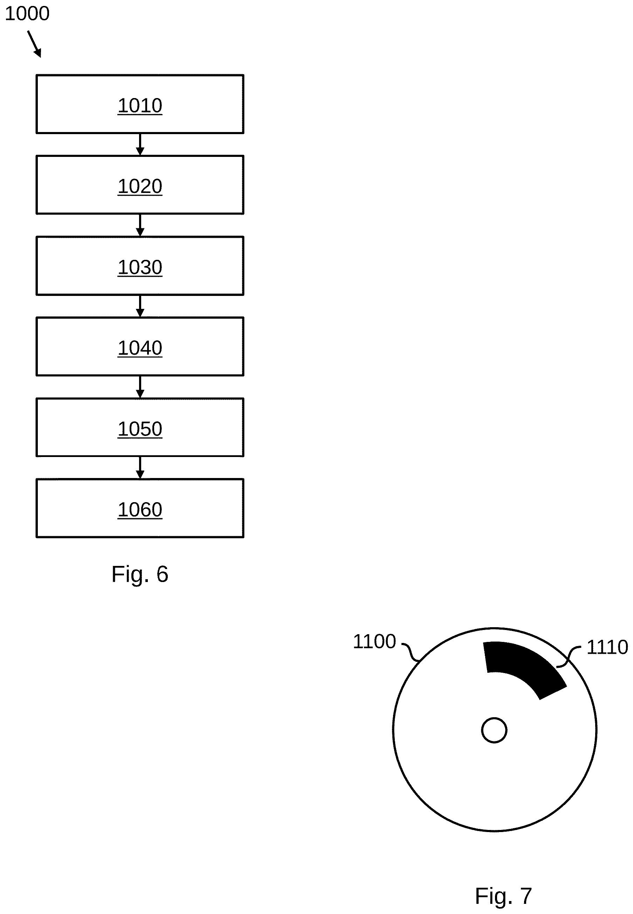

**Fig. 6** shows a block-diagram of a cryptographic method 1000 of performing a privacy-preserving computation. The method 1000 may be computer-implemented. The privacy-preserving computation may be performed by a cryptographic device as a secure multi-party computation between multiple cryptographic devices comprising the cryptographic device. For example, the cryptographic device can be device 100 of Fig. 1. However, this is not a limitation, in that the method 1000 may also be performed using another system, apparatus or device.

The method 1000 may comprise, in an operation titled "COMMUNICATE", communicating 1010 with at least one further cryptographic device of the cryptographic system.

The method 1000 may comprise, in an operation titled "ACCESS", accessing 1020 data representing a numerator and a secret denominator;

The method 1000 may comprise performing an integer division of the numerator and the secret denominator.

To perform the integer division, the method 1000 may comprise, in an operation titled "OBTAIN", under the multi-party computation, obtaining 1030 a secret normalized denominator and a secret normalization factor representing the secret denominator.

To perform the integer division, the method 1000 may comprise, in an operation titled "RECIPROCATE", under the multi-party computation, determining 1040, from the secret normalized denominator, a secret normalized denominator reciprocal.

To perform the integer division, the method 1000 may comprise, in an operation titled "ADD BIAS", under the multi-party computation, adding 1060 a bias to the secret normalized denominator reciprocal to obtain a secret biased normalized denominator reciprocal.

To perform the integer division, the method 1000 may comprise, in an operation titled "DETERMINISTIC TRUNCATE", under the multi-party computation, determining a secret division result by performing 1070 a deterministic truncation based on the numerator, the secret biased normalized denominator reciprocal, and the secret normalization factor.

The method 1000 may further comprise the carrying out of the secure multi-party computation by the other cryptographic devices. For example, the method 1000 may be carried out by a cryptographic system, e.g., cryptographic system 010 of Fig. 2. Although the roles of the multi-party computation parties are typically carried out by distinct devices, it is also possible to combine the roles of multiple parties in a single device, e.g., in a method of performing the privacy-computation as a MPC-in-the-Head.

It will be appreciated that, in general, the operations of method 1000 of Fig. 10 may be performed in any suitable order, e.g., consecutively, simultaneously, or a combination thereof, subject to, where applicable, a particular order being necessitated, e.g., by input/output relations.

The method(s) may be implemented on a computer as a computer implemented method, as dedicated hardware, or as a combination of both. As also illustrated in **Fig. 7,** instructions for the computer, e.g., executable code, may be stored on a computer readable medium 1100, e.g., in the form of a series 1110 of machine-readable physical marks and/or as a series of elements having different electrical, e.g., magnetic, or optical properties or values. The medium 1100 may be transitory or non-transitory. Examples of computer readable mediums include memory devices, optical storage devices, integrated circuits, servers, online software, etc. Fig. 11 shows an optical disc 1100.

The instructions may be instructions for one or more particular devices of the cryptographic system, e.g., instructions to act as a first, second, and/or further cryptographic device of a cryptographic system as described herein.

Examples, embodiments or optional features, whether indicated as non-limiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A cryptographic system (010) for performing a privacy-preserving computation on secret data, wherein the cryptographic system comprises multiple cryptographic devices (221-223), wherein the multiple cryptographic devices are configured to perform the computation as a cryptographic secure multi-party computation between the multiple cryptographic devices, wherein the privacy-preserving computation comprises performing an integer division of a numerator (410) and a secret denominator, wherein a cryptographic device of the multiple cryptographic devices is configured to perform the integer division by, under the multi-party computation:

   - obtaining a secret normalized denominator (421) and a secret normalization factor (422) representing the secret denominator;
   - determining (432), from the secret normalized denominator (421), a secret normalized denominator reciprocal (433);
   - adding (450) a bias (447) to the secret normalized denominator reciprocal (433) to obtain a secret biased normalized denominator reciprocal (451);

- determining the secret division result (471) by performing a deterministic truncation (470) based on the numerator (410), the secret biased normalized denominator reciprocal (451), and the secret normalization factor (422).

2. The cryptographic system (010) of claim 1, wherein the integer division is a floor division, a ceil division, an inwards rounding division, an outwards rounding division.

3. The cryptographic system (010) of claim 1 or 2, wherein the cryptographic device is configured to represent the secret normalized denominator reciprocal (433) as a fixed-point number.

4. The cryptographic system (010) of claim 3, wherein the integer representation of the bias (447) has absolute value at most 8, preferably at most 4.

5. The cryptographic system (010) of any preceding claim, wherein the cryptographic device is configured to compute the bias (447) as a secret value of the multi-party computation by determining (544) a sign value (545) for the bias.

6. The cryptographic system (010) of any preceding claim, wherein the cryptographic device is configured to determine the secret division result (471) by performing a deterministic truncation based on the product of the numerator (410), the secret biased normalized denominator reciprocal (451), and the secret normalization factor (422).

7. The cryptographic system (010) of claim 6, wherein the cryptographic device is configured to perform the deterministic truncation by performing a first multiplication operation (560) and performing a further multiply-and-truncate operation (570).

8. The cryptographic system (010) of any preceding claim, wherein the cryptographic device is configured to determine the secret normalized denominator reciprocal (433) by applying (432) the Newton-Raphson method.

9. The cryptographic system (010) of claim 8, wherein cryptographic device is configured to normalize the secret denominator into the secret normalized denominator (421) and the secret normalization factor (422), for example, by performing a normalization to the interval [0.5, 1).

10. The cryptographic system (010) of any preceding claim, wherein the cryptographic device is further configured to, under the multi-party computation, scale (530) the secret normalized denominator (521) according to a reciprocal precision prior to determining the secret normalized denominator reciprocal.

11. The cryptographic system (010) of any preceding claim, wherein the cryptographic device is configured to determine (432) the secret normalized denominator reciprocal by perform a modulus conversion based on the denominator (411).

12. The cryptographic system (010) of any preceding claim, wherein the numerator (410) is a public value of the multi-party computation, e.g., the numerator is one.

13. A cryptographic device (100, 221-223) for use in the cryptographic system (010) comprising multiple cryptographic devices according to any one of claims 1-12, wherein the cryptographic device is for performing a privacy-preserving computation as a cryptographic secure multi-party computation between the multiple cryptographic devices, wherein the cryptographic device comprises:

- a communication interface (180) configured for communication with at least one further cryptographic device of the cryptographic system;
- a data interface (120) for accessing data (030) representing a numerator and a secret denominator;
- a processor subsystem (140) configured to perform an integer division of the numerator and the secret denominator by, under the multi-party computation:

- obtaining a secret normalized denominator and a secret normalization factor representing the secret denominator;
- determining, from the secret normalized denominator, a secret normalized denominator reciprocal;
- adding a bias to the secret normalized denominator reciprocal to obtain a secret biased normalized denominator reciprocal;
- determining a secret division result by performing a deterministic truncation based on the numerator, the secret biased normalized denominator reciprocal, and the secret normalization factor.

14. A cryptographic method (1000) of performing a privacy-preserving computation, wherein the privacy-preserving computation is performed by a cryptographic device as a secure multi-party computation between multiple cryptographic devices comprising the cryptographic device, wherein the method comprises:

- communicating (1010) with at least one further cryptographic device of the cryptographic system;
- accessing (1020) data representing a numerator and a secret denominator;
- performing an integer division of the numerator and the secret denominator by, under the multiparty computation:

- obtaining (1030) a secret normalized denominator and a secret normalization factor representing the secret denominator;
- determining (1040), from the secret normalized denominator, a secret normalized denominator reciprocal;
- adding (1050) a bias to the secret normalized denominator reciprocal to obtain a secret biased normalized denominator reciprocal;
- determining (1060) a secret division result by performing a deterministic truncation based on the numerator, the secret biased normalized denominator reciprocal, and the secret normalization factor.

15. A transitory or non-transitory computer-readable medium (1100) comprising data (1110) representing instructions which, when executed by a processor system, cause the processor system to perform the cryptographic method of claim 14.

Fig. 1

Fig. 2

Fig. 3

Fig. 4

510 — **Num**    n (0)

511 — **Den**    d (0)

520 — **Norm** (*rd*)

d (*v*)   **NDen** — 521
ds (*rd*)        **Normf** — 522    2^v (0)
                                    1 (*v*)

530 — **ScaleR** (*P-rd*)

544 — **Sign**

d (*P+v-rd*) **NDenS** — 531
ds (*P*)

532 — **Recip** (*P*)

4 (0)
B (*P-v+rd*)

543 — **UBias**   545 — **σ**

533 — **NDenR**                    ±1 (0)

1/d (*P-v+rd*)
1/ds (*P*)                 546 — **Mul**

                           547 — **Bias**

                                    ±4 (0)
                                    ±B (*P-v+rd*)

1/d±B (*P-v+rd*)

560 — **Mul** ← **BNDenR** ← **Add** — 550
              551

561 — **DivN**    **MulTr** — 570
                  (*P+rd*)

n*(1/d±B) (*P-v+rd*)

571 — **Div**    n*(1/d±B) (0)

**Fig. 5**

19

Fig. 6

Fig. 7

Fig. 8

Europäisches
Patentamt
European
Patent Office
Office européen
des brevets

## EUROPEAN SEARCH REPORT

**Application Number**

EP 26 15 2051

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | De Hoogh: "Design of large scale applications of secure multiparty computation : secure linear programming", , 1 January 2012 (2012-01-01), pages 1-230, XP093201932, DOI: 10.6100/IR735328 Retrieved from the Internet: URL:https://research.tue.nl/files/3430368/735328.pdf * section 4.5 * | 1-15 | INV. G06F7/535 |
| A | OCTAVIAN CATRINA ET AL: "Secure Computation with Fixed-Point Numbers", 25 January 2010 (2010-01-25), FINANCIAL CRYPTOGRAPHY AND DATA SECURITY SPRINGER BERLIN HEIDELBERG, BERLIN, HEIDELBERG, PAGE(S) 35 - 50, XP019147523, ISSN: 0302-9743 ISBN: 9783642145766 * section 3 * | 1-15 | |

**TECHNICAL FIELDS SEARCHED (IPC)**

G06F
H04L

The present search report has been drawn up for all claims

| Place of search | Date of completion of the search | Examiner |
|---|---|---|
| Munich | 13 May 2026 | Prins, Leendert |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. HARMON et al.** Mercury: Constant-Round Protocols for Multi-Party Computation with Rationals. *Cryptology ePrint Archive*, 2023, vol. 855
- **S. DE HOOGH**. Design of large scale applications of secure multiparty computation: secure linear programming. *PhD thesis at Eindhoven University of Technology*, 2012
- **Y. ISHAI et al.** Zero-knowledge from secure multi-party computation. *proceedings STOC*, 2007
- **SHAMIR**. How to Share a Secret. *Communications ACM*, 1979
- **BEN-OR** ; **GOLDWASSER** ; **WIGDERSON**. Completeness Theorems for Non-Cryptographic Fault-Tolerant Distributed Computation (Extended Abstract). *Proceedings of the 20th Annual ACM Symposium on Theory of Computing*, 1988
- **CHAUM** ; **CREPEAU** ; **DAMGAARD**. Multiparty Unconditionally Secure Protocols (Extended Abstract). *Proceedings of the 20th Annual ACM Symposium on Theory of Computing*, 1988
- **ITO** ; **SAITO** ; **NISHIZEKI**. Secret sharing scheme realizing general access structure. *Electronics and Communications in Japan (Part III: Fundamental Electronic Science*, 1989
- **DAMGAARD** ; **PASTRO** ; **SMART** ; **ZAKARIAS**. Multiparty Computation from Somewhat Homomorphic Encryption. *proceedings CRYPTO*, 2012
- **YAO**. Protocols for Secure Computations (Extended Abstract). *23rd Annual Symposium on Foundations of Computer Science*, 1982
- **GOLDREICH** ; **MICALI, WIGDERSON**. How to Play any Mental Game or A Completeness Theorem for Protocols with Honest Majority. *Proceedings of the 19th Annual ACM Symposium on Theory of Computing*, 1987
- **CRAMER** ; **DAMGAARD** ; **NIELSEN**. Multiparty Computation from Threshold Homomorphic Encryption. *proceedings EUROCRYPT*, 2001
- **DEMMLER** ; **SCHNEIDER** ; **ZOHNER**. ABY - A Framework for Efficient Mixed-Protocol Secure Two-Party Computation. *proceedings NDSS*, 2015
- **R. CRAMER et al.** General Secure Multi-Party Computation from any Linear Secret-Sharing Scheme. *proceedings EUROCRYPT*, 2000
- **M. KELLER**. MP-SPDZ: A Versatile Framework for Multi-Party Computation. *proceedings ACM CCS*, 2020
- **T. P. JAKOBSEN** ; **J. B. NIELSEN** ; **C. ORLANDI**. A framework for outsourcing of secure computation. *proceedings CCSW'14*